# EUROPÄISCHE PATENTSCHRIFT

(11) **EP 2 700 461 B1**
(45) Veröffentlichungstag und Bekanntmachung des Hinweises auf die Patenterteilung: **18.05.2016**
(21) Anmeldenummer: 12181075.8
(22) Anmeldetag: 20.08.2012
(51) Int. Cl.: B23B 31/16, B23B 31/28

(54) **Vorrichtung zum Einspannen eines Werkzeugs oder eines Werkstücks und Verfahren zum Betätigen einer solchen Spannvorrichtung**
Device for clamping a tool or workpiece and method for actuating such a clamping device
Dispositif de serrage d'un outil ou d'une pièce à usiner et procédé d'actionnement d'un tel dispositif de serrage

(43) Veröffentlichungstag der Anmeldung: 26.02.2014
(73) Patentinhaber: Klingelnberg AG, 8050 Zürich (CH)
(72) Erfinder: Mikoleizig, Günter, 42499 Hückeswagen (DE)
(74) Vertreter: Heusch, Christian

(56) Entgegenhaltungen:
- EP-A1- 0 554 685
- DE-A1- 3 314 629
- JP-A- 2001 246 511
- US-A- 4 573 379

## Beschreibung

Die Erfindung betrifft eine Vorrichtung gemäß dem Oberbegriff des Anspruchs 1 zum Einspannen eines Werkzeugs oder Werkstücks in einer Spannvorrichtung, zum Beispiel als Teil einer Bearbeitungs- oder Messmaschine, und ein Verfahren gemäß Anspruch 12 zum Betätigen einer entsprechenden Spannvorrichtung.

Eine solche Vorrichtung ist aus der EP-A1-554 685 bekannt.

### HINTERGRUND DER ERFINDUNG

Es gibt zahlreiche Bearbeitungsverfahren zum Herstellen von Präzisionsteilen, bei denen das Werkstück in einer Spannvorrichtung einer Bearbeitungsmaschine eingespannt wird. Beim Einspannen ist es einerseits wichtig, dass das Werkstück so fest in der Spannvorrichtung gehalten wird, dass es sich trotz der auftretenden Bearbeitungskräfte nicht löst oder verlagert. Andererseits ist es wichtig, die genaue Einspannposition des Werkstücks in der Spannvorrichtung und somit auch in der Maschine zu kennen. So kann ein Bezug zu dem Koordinatensystem der Maschine hergestellt werden, was für die Genauigkeit der Bearbeitung von Bedeutung ist.

Das Einspannen eines Objekts muss so erfolgen, dass dieses absolut spielfrei, lagerichtig und lagesicher den Bearbeitungskräften widersteht oder im Fall einer Messmaschine hochgenau abgetastet werden kann.

Teilweise ist das Einspannen sehr zeit- und arbeitsaufwendig und bisher wird ein Teil der Schritte manuell ausgeführt. Bei größeren Bauteilen kann deren manuelle Handhabung aufgrund des Eigengewichts oder der Dimensionen erschwert sein. Auch bei grossen Stückzahlen (z.B. in einer Serienfertigung) kann eine manuelle Handhabung nachteilig sein. Daher besteht seit längerem der Bedarf das Einspannen von Werkzeugen, Werkstücken, Messlingen und anderen Objekten zu automatisieren. Bei einer solchen Automatisierung kommt aber vor allem bei Messmaschinen hinzu, dass die Spannvorrichtung, die zum automatisierten Einspannen dient, keinen negativen Einfluss auf die Messgenauigkeit haben darf.

Aufgabe der Erfindung ist es, ein Spannfutter bzw. eine Spannvorrichtung bereit zu stellen, die ein automatisiertes Einspannen eines Objekts ermöglicht, wobei das Spannfutter bzw. die Spannvorrichtung keinen negativen Einfluss auf die Genauigkeit des Gesamtsystems (Bearbeitungsmaschine, Messmaschine oder Prüfstand) haben soll.

Eine entsprechende Lösung soll auch den Handhabungsaufwand reduzieren, der bisher durch Bedienpersonal aufgebracht werden muss.

Die Aufgabe wird durch eine Vorrichtung gemäss Patentanspruch 1 und ein Verfahren gemäss Patentanspruch 12 gelöst.

Vorteilhafte Ausgestaltungen der erfindungsgemässen Vorrichtung bilden die Gegenstände der Patentansprüche 2 bis 9. Ein entsprechend ausgestattetes Gesamtsystem ist den Ansprüchen 10 und 11 zu entnehmen. Vorteilhafte Ausgestaltungen des erfindungsgemässen Verfahrens bilden den Gegenstand der Patentansprüche 12 bis 16.

Gemäss Erfindung kommt eine Spannvorrichtung zum Einsatz, die an einer drehantreibbaren Spindel angeordnet ist und an der Spannmittel zum mechanischen Einspannen eines Spannobjekts angeordnet sind. Die Spannmittel umfassen einen Drehkörper, der es ermöglicht durch das Ausführen einer relativen Drehbewegung des Drehkörpers in Bezug zur Spindel das Spannobjekt einzuspannen oder auszuspannen. Die Spannvorrichtung zeichnet sich dadurch aus, dass der Drehkörper eine Verzahnung aufweist und dass die Spannvorrichtung zusätzlich ein Antriebszahnrad umfasst, das mit einer Verzahnung versehen ist, die komplementär zu der Verzahnung des Drehkörpers ausgelegt ist. Das Antriebszahnrad ist im Eingriff mit dem Drehkörper positioniert. Ausserdem umfasst die Spannvorrichtung einen Antrieb zum Drehantreiben des Antriebszahnrads. Die Verzahnung des Drehkörpers ist zusammen mit der Verzahnung des Antriebszahnrads unter Vorgabe eines Flankenspiels so ausgelegt, dass das Antriebszähnrad in Bezug zum Drehkörper eine neutrale Winkelstellung einnehmen kann, bei der weder eine vorauseilende noch eine nacheilende Zahnflanke der Verzahnung des Antriebszahnrads mit den korrespondierenden Zahnflanken der Verzahnung des Drehkörpers im Kontakt stehen.

Vorzugsweise ist der Drehkörper bei allen Ausführungsformen Bestandteil eines als Drehfutter ausgelegten Spannmittels.

Vorzugsweise ist das Antriebszahnrad mittels des Antriebs durch eine Steuerung in die neutrale Winkelstellung bringbar. Zu diesem Zweck kommen vorzugsweise Winkelmesssensoren im Bereich des Drehkörpers und des Antriebszahnrads zum Einsatz, die mit der Steuerung schaltungstechnisch verknüpft sind.

Vorzugsweise ist die Steuerung dazu ausgelegt die Stromaufnahme des Antriebs des Antriebszahnrads zu ermitteln (zu überwachen), um beim Einspannen aus der Stromaufnahme des Antriebs ein erfolgreiches Einspannen und/oder das Erreichen einer (vorgegebenen) Einspannkraft ermitteln zu können. Falls das erfolgreiche Einspannen und/oder das Erreichen einer Einspannkraft durch die die Steuerung ermittelt wurde, wird dann in einem nachgelagerten Schritt durch die Steuerung der Drehkörper relativ zum Antriebszahnrad in die neutrale Stellung überführt und in dieser Stellung gehalten.

Vorzugsweise unterbricht die Steuerung die Stromzufuhr des Antriebs sobald das erfolgreiche Einspannen und/oder das Erreichen einer Einspannkraft durch die Steuerung ermittelt wurde, um dann den Drehkörper relativ zum Antriebszahnrad in die neutrale Stellung zu überführen.

Je nach Gewicht, Werkstoff, Längen-/Durchmesserverhältnis, Spanntiefe und anderer Bedingungen müssen die Spannkräfte höher oder niedriger eingestellt werden. Eine entsprechende Anpassung der Spannkräfte ist möglich, indem der Steuerung eine entsprechende Vorgabe gemacht wird.

Besonders geeignet ist der Einsatz der Erfindung in einer Mess- oder Prüfmaschine, da aufgrund der Neutralstellung ein möglicher Einfluss des Antriebs des Antriebszahnrads auf die Messung öder Prüfung ausgeschlossen werden kann.

Die Erfindung lässt sich aber auch in einer Bearbeitungsmaschine einsetzen, wenn diese für hochgenaue (Fein-)Bearbeitungen eines Werkstücks oder zum Beispiel zum Abrichten eines Werkzeugs ausgelegt ist. Auch hier kann der Einfluss des Antriebszahnrads auf die Bearbeitung störend sein. Daher wird auch hier vorzugsweise bei allen Ausführungsformen der Drehkörper relativ zum Antriebszahnrad in die neutrale Stellung überführt.

Es ist ein Vorteil der Erfindung, dass durch das bewusst vorgegebene Flankenspiel Verzahnungsungenauigkeiten (Teilung/Rundlauf) ausgeglichen werden können. Anders ausgedrückt bedeutet das, dass das Getriebe aus Antriebszahnrad und Drehkörper nicht besonders genau ausgelegt werden muss.

Es ist ein weiterer Vorteil der Erfindung, dass die Spannvorrichtung, oder deren Teile, relativ problemlos ausgetauscht werden können.

Es ist jedoch der wichtigste Vorteil der Erfindung, dass der (Hilfs-) Antrieb und das Antriebszahnrad keinerlei störende Einwirkungen auf das Laufverhalten der Spindelachse hat, wenn die neutrale Winkelstellung eingehalten wird.

### ZEICHNUNGEN

Ausführungsbeispiele der Erfindung werden im Folgenden unter Bezugnahme auf die Zeichnungen näher beschrieben.
- **FIG. 1A**: zeigt eine schematisierte Seitenansicht eines Gesamtsystems (hier eine Messmaschine), die mit einer Spannvorrichtung der Erfindung ausgestattet ist;
- **FIG. 1B**: zeigt eine schematisierte Draufsicht eines Teils des Gesamtsystems nach Fig. 1A;
- **FIG. 2A**: zeigt eine schematisierte Draufsicht einer Zahnlücke des Antriebszahnrads und eines Zahnes des Drehkörpers, wobei einseitig ein Flankenkontakt besteht;
- **FIG. 2B**: zeigt eine schematisierte Draufsicht der Zahnlücke des Antriebszahnrads und des Zahnes des Drehkörpers nach Fig. 2A, wobei das Antriebszahnrad in Bezug zum Drehkörper in einer neutralen Winkelstellung steht.

### DETAILIERTE BESCHREIBUNG

Im Zusammenhang mit der vorliegenden Beschreibung werden Begriffe verwendet, die auch in einschlägigen Publikationen und Patenten Verwendung finden. Es sei jedoch angemerkt, dass die Verwendung dieser Begriffe lediglich dem besseren Verständnis dienen soll. Der erfinderische Gedanke und der Schutzumfang der Patentansprüche soll durch die spezifische Wahl der Begriffe nicht in der Auslegung eingeschränkt werden. Die Erfindung lässt sich ohne weiteres auf andere Begriffssysteme und/oder Fachgebiete übertragen. In anderen Fachgebieten sind die Begriffe sinngemäß anzuwenden.

Bevor spezielle Ausführungsformen der Erfindung beschrieben werden, sollen die wesentlichen Begriffe definiert werden, insoweit sie nicht selbsterklärend sind.

Als Vorrichtung 10 wird hier ein Teil eines Gesamtsystems 100 bezeichnet. Bei dem Gesamtsystem 100 kann es sich zum Beispiel um eine Bearbeitungsmaschine, eine Messmaschine oder einen Prüfstand handeln. Im Folgenden wird die Erfindung anhand einer Messmaschine 100 beschrieben, da hier die Anwendung der Erfindung besonders vorteilhaft ist.

Als (CNC-)Steuerung 50 wird eine programmierbare, rechnerbasierte Steuerung verstanden. Die Steuerungsaufgaben werden direkt von einem Computersystem (meist einem Mikrorechner) vorgenommen. Zu diesem Zweck verarbeitet die (CNC-)Steuerung 50 ein NC-Programm, das eine Abfolge von Befehlen umfasst. Die Achsen, respektive deren Antriebe, des Gesamtsystems 100 sind entsprechend bei allen Ausführungsformen steuer- bzw. regelbar ausgelegt.

Vorzugsweise handelt es sich bei allen Ausführungsformen bei der (CNC-)Steuerung 50 um einen Multi-Achscontroller, der zusätzlich zur Kontrolle und Regelung der Achsen des Gesamtsystems 100 auch einen (Hilfs-)Antrieb 23 kontrolliert und regelt.

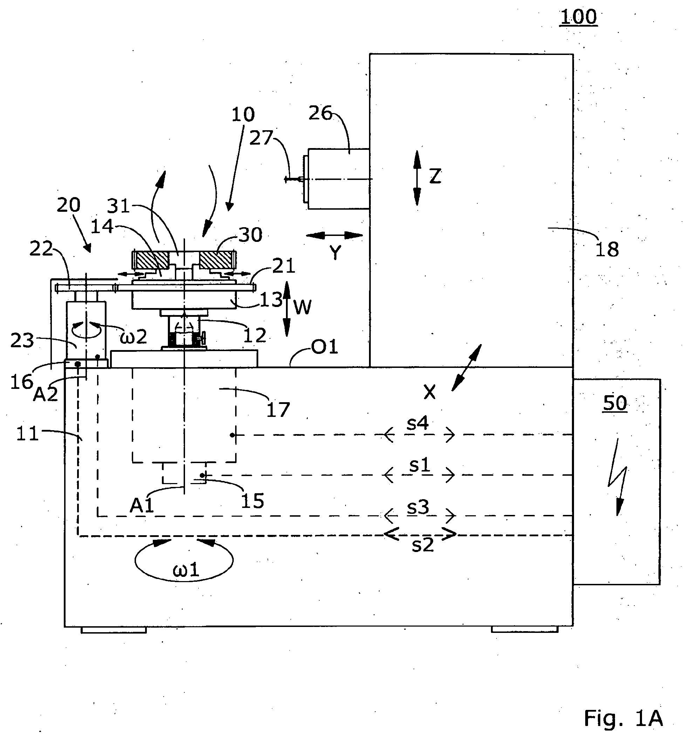

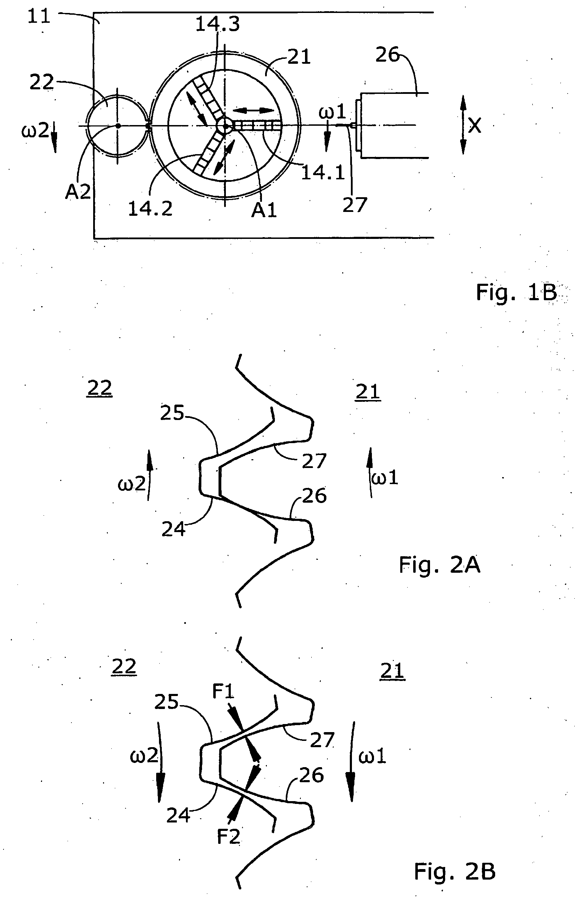

Der Begriff Spannmittel 14 wird verwendet, um jegliche Form von mechanischem Mittel zu umschreiben, das es ermöglicht ein Spannobjekt 30 einzuspannen oder festzuklemmen. Der Begriff Spannmittel 14 umfasst nicht nur solche Spannmittel 14, die mit Drehbewegungen arbeiten, sondern auch Spannmittel 14, die durch die Drehung eine Bewegung auslösen oder eine übersetzte Bewegung hervorrufen, die die Spannung eines Spannobjekts 30 bewirkt. Die Spannmittel 14 dienen zum lagerichtigen und -genauen Festhalten des Spannobjekts 30 an der Spindel 12. Der Begriff Spannmittel 14 umfasst zum Beispiel (Spitzen-)Spannfutter, wie sie von Bohrmaschinen bekannt sind. Es geht aber auch um (Backen-)Spannmittel 14, bei denen Spannbacken 14.1, 14.2, 14.3 radial nach innen oder aussen bewegt werden, um das Spannobjekt 30 fest zu spannen. Im Folgenden wird die Erfindung anhand eines Ausführungsbeispiels beschreiben, bei dem Spannbacken 14.1, 14.2, 14.3 als Spannmittel 14 dienen, wie man in Fig. 1B erkennen kann. In Fig. 1A ist zu erkennen, dass die Spannbacken 14.1, 14.2, 14.3 in eine Zentralbohrung 31 eines Spannobjekts 30 (hier ein aussenverzahntes Zylinderrad) eingreifen und das Spannobjekt 30 festspannen, indem die Spannbacken 14.1, 14.2, 14.3 radial nach aussen bewegt wurden.

Der Begriff Spannobjekt 30 wurde bewusst breit gewählt, da die Erfindung zum Einspannen oder Festklemmen einer Vielzahl verschiedener Objekte (Körper) 30 eingesetzt werden kann. Der Begriff Spannobjekt 30 umfasst unter anderem Werkzeuge, Werkstücke und Messlinge (Prüfkörper).

Anhand der Figuren 1A und 1B werden nun Details einer besonders bevorzugten Spannvorrichtung 10 beschrieben. Die Spannvorrichtung 10 ist hier Teil einer Messmaschine 100, die einen Maschinentisch 11 und einen turmartigen Messaufbau 18 umfasst. Auf der Oberseite O1 des Maschinentischs 11 ist eine Spindel 12 angeordnet, deren Spindelachse A1 senkrecht zu der Ebene der Oberseite O1 steht. Die Spindelachse A1 dient hier als Drehtisch-Messachse. Im Inneren der Messmaschine 100 kann ein Spindelantrieb 17 sitzen, der mit der Spindelachse A1 so gekoppelt ist, dass eine Drehbewegung des Spindelantriebs 17 die Spindel 12 dreht. Die Drehbewegung um die Spindelachse A1 ist mit ω1 bezeichnet. An dem Spindelantrieb 17 kann ein Winkelmesssensor 15 sitzen, der mit einer (CNC-)Steuerung 50 schaltungstechnisch verbunden ist. Die schaltungstechnische Verbindung zwischen Winkelmesssensor 15 und (CNC-) Steuerung 50 ist mit dem Bezugszeichen s1 gekennzeichnet.

Die Spindel 12 kann einen optionalen Adapter 13 umfassen, wie in Fig. 1A zu erkennen ist. Die Spannvorrichtung 10 ist im gezeigten Beispiel über den optionalen Adapter 13 mit der Spindel 12 verbunden. Sie kann aber auch direkt mit der Spindel 12 verbunden sein. Die Spannvorrichtung 10, der optionale Adapter 13 und die Spindel 12 sind koaxial zu der Spindelachse A1 angeordnet und drehen sich solidarisch um dieselbe, wenn die (CNC-)Steuerung 50 den Spindelantrieb 17 mit Strom ansteuert.

Im Bereich der Spindel 12 ist ein Drehkörper 21 angeordnet, der vorzugsweise bei allen Ausführungsformen eine Ringform mit Aussenverzahnung aufweist. Allgemeiner ausgedrückt kann gesagt werden, dass der Drehkörper 21 mit einer (Aussen- oder Innen-)Verzahnung versehen ist. Durch das Ausführen einer relativen Drehbewegung des Drehkörpers 21 in Bezug zur Spindel 21 kann das Spannobjekt 30 eingespannt (bzw. festgeklemmt) oder ausgespannt (bzw. gelöst) werden. Dieser Vorgang und das Zusammenwirken der mechanischen Elemente ist hinlänglich aus der Praxis bekannt und wird daher hier nicht weiter erläutert.

Im Umfeld der Spindel 12 ist ein Antriebszahnrad 22 so angeordnet, dass es mit der Verzahnung des Drehkörpers 21 im Eingriff steht. D.h. es steht stets immer mindestens ein Zahn der Verzahnung des Antriebszahnrads 22 in einer Zahnlücke der Verzahnung des Drehkörpers 21, wie in den Figuren 2A und 2B angedeutet.

Der Drehkörper 21 weist, wie bereits erwähnt, eine Aussen- oder Innenverzahnung auf. Ausserdem umfasst die Spannvorrichtung 10 das erwähnte Antriebszahnrad 22, das mit einer Aussen- oder Innenverzahnung versehen ist. Die Verzahnung des Antriebszahnrades 22 ist komplementär zu der Verzahnung des Drehkörpers 21 ausgelegt. Das Antriebszahnrad 22 ist (im Normalfall) im Eingriff mit dem Drehkörper 21 positioniert, d.h. die Zähne greifen ineinander, oder um es genauer auszudrücken, greifen die Zähne der einen Verzahnung in die Zahnlücken der komplementär ausgelegten Verzahnung.

Die Spannvorrichtung 10 umfasst weiterhin einen CNC-steuerbaren (Hilfs-)Antrieb 23 zum Drehantreiben des Antriebszahnrads 22. Wesentlich ist nun, dass die Verzahnung des Drehkörpers 21 zusammen mit der Verzahnung des Antriebszahnrads 22 unter Vorgabe eines Flankenspiels F (mit F = F1 +F2; siehe Fig. 2B) so ausgelegt wurden, dass das Antriebszahnrad 22 in Bezug zum Drehkörper 21 eine neutrale Winkelstellung einnehmen kann. Diese neutrale Winkelstellung ist in Fig. 2B zu erkennen. In der neutralen Winkelstellung steht weder eine vorauseilende noch eine nacheilende Zahnflanke 24, 25 der Verzahnung des Antriebszahnrads 22 mit den korrespondierenden Zahnftanken 26, 27 der Verzahnung des Drehkörpers 21 in Kontakt. D.h. in der neutralen Winkelstellung berühren sich der Drehkörper 21 und das Antriebszahnrad 22 nicht.

Beim Öffnen und/oder Schliessen der Spannmittel 14 muss der Drehkörper 21 relativ zur Spindel 12 eine Drehbewegung um die Spindelachse A1 ausführen. Dabei wird entweder die Spindel 12 festgehalten (gebremst) und der Drehkörper 21 gedreht, oder es wird der Drehkörper 21 festgehalten (gebremst) und die Spindel 12 gedreht. Beim letzteren Fall würde sich dasSpannobjekt 30 (z.B. ein Werkstück) mit der Spindel 12 mitdrehen, was für eine automatisierte Beladung oder manuelle Beladung nachteilig sein kann.

Im Folgenden wird eine Ausführungsform beschrieben, bei der die Spindel 12 festgehalten (gebremst) und der Drehkörper 21 gedreht wird. Um den Drehkörper 21 drehen zu können, umfasst die Spannvorrichtung 10 den (Hilfs-) Antrieb 23, der bei allen Ausführungsformen zum CNC-gesteuerten Drehantreiben des Antriebszahnrads 22 ausgelegt ist. In Fig. 1A ist zu erkennen, dass dieser Antrieb 23 zum Beispiel am Maschinentisch 11 befestigt sein kann. Der Antrieb 23 liegt eine (Hilfs-)Achse A2 fest, die im Wesentlichen parallel zu der Spindelachse A1 verläuft.

An dem Antrieb 23 kann ein Winkelmesssensor 16 sitzen, der mit einer (CNC-)Steuerung 50 schaltungstechnisch verbunden ist. Die schaltungstechnische Verbindung zwischen Winkelmesssensor 16 und (CNC-) Steuerung 50 ist mit dem Bezugszeichen s2 gekennzeichnet.

Im Folgenden werden weitere beispielhafte Details eines Gesamtsystems 100 (hier eine Messmaschine 100) beschrieben. An dem eingangs erwähnten Messaufbau 18 kann eine Messachse 26 vorgesehen sein, die einen Messtaster 27 (hier einen Taststift) trägt.

Die Messmaschine 100 kann mehrere CNC-gesteuerte Achsantriebe umfassen, die von der (CNC-)Steuerung 50 angesteuert werden. Die entsprechenden Antriebe und steuerungstechnischen Verbindungen sind nicht gezeigt. In Fig. 1A sind lediglich die steuerungstechnischen Verbindungen s3 zum Steuern des Antriebs 23 und s4 zum Steuern des Antriebs 17 dargestellt, da es bei der Erfindung im Wesentlichen nur um das korrekte Zusammenspiel der Drehbewegungen um die Achse A1 und die (Hilfs-)Achse A2 geht.

Eine solche Messmaschine 100 kann zum Beispiel einen X-Antrieb umfassten, der es ermöglicht den Messaufbau 18 von der (CNC-)Steuerung 50 kontrolliert, in X-Richtung (siehe z.B. Fig. 1B) zu bewegen. Ein Y-Antrieb ermöglicht es die Messachse 26 aus dem Messaufbau 18 heraus zu fahren oder diese zurück zu ziehen. Auch diese Bewegung wird von der (CNC-)Steuerung 50 kontrolliert. Ein CNC-gesteuerter Z-Antrieb ermöglicht es die Messachse 26 entlang des Messaufbaus 18 nach oben oder unten zu fahren. In Fig. 1A ist durch den mit W bezeichneten Doppelpfeil die Bedienrichtung eines Spannfutterwechsels oder die Richtung des Entnehmens und Aufsetzens eines Spannobjekts 30 gekennzeichnet.

Die Drehbewegung der Spindel 12 um die Spindelachse A1 ist mit ω1 gekennzeichnet und die Drehbewegung des Antriebszahnrads 22 um die (Hilfs-)Achse A2 ist mit ω2 gekennzeichnet. Das CNC-gesteuerte Ansteuern des Antriebs 23 kann über eine schaltungstechnische Verbindung s3 erfolgen, wie in Fig. 1A angedeutet. Das CNC-gesteuerte Ansteuern des Antriebs 17 kann über eine schaltungstechnische Verbindung s4 erfolgen, wie in Fig. 1A angedeutet.

Anhand der Figuren 1A, 1B und 2A werden nun beispielhafte Schritte der Erfindung erläutert, die nach dem Aufsetzen (Einbringen) des Spannobjekts 20 ausgeführt werden. Entweder erfolgt das Drehantreiben des Antriebszahnrads 22, das mit dem Drehkörper 21 der Spindel 12 im Eingriff steht, während die Spindel 12 festgehalten (gebremst) wird, oder es erfolgt das Drehantreiben der Spindel 12, während der Drehkörper 21, der mit dem Antriebszahnrad 22 im Eingriff steht, durch das Antriebszahnrad 22 festgehalten wird. So ergibt sich eine relative Drehbewegung zwischen dem Drehkörper 21 und der Spindel 12. Durch diese relative Drehbewegung werden bei allen Ausführungsformen die Spannmittel 14 so bewegt, dass sie das Spannobjekt 30 einspannen oder ausspannen. In Fig. 1B ist das Bewegen der Spannmittel 14 (hier in Form von drei radial beweglich gelagerten Spannbacken 14.1, 14.2, 14.3) durch drei Doppelpfeile gezeigt, die neben den Spannbacken 14.1, 14.2, 14.3 angeordnet sind.

Wenn z.B. das Antriebszahnrad 22 in Fig. 1B eine Winkelbewegung ω2 im Gegenuhrzeigersinn macht, wird der Drehkörper 21 vom Antriebszahnrad 22 im Uhrzeigersinn gedreht, wie durch ω1 angedeutet. Diese Situation ist in Fig. 2A schematisch angedeutet. Die vorauseilende Zahnflanke 24 des Antriebszahnrads 22 steht mit der Flanke 26 des Drehkörpers 21 in Kontakt und überträgt das Antriebsdrehmoment auf den Drehkörper 21. Die Spindel 12 und die Spannbacken 14.1, 14.2, 14.3 sowie das Spannobjekt 30 drehen sich in dem in Fig. 2A gezeigten Moment nicht, da diese durch Bremsmittel (z.B. durch den im Bremsmodus betriebenen Antrieb 17) gehalten werden. Das Antriebsdrehmoment wird vom Antriebszahnrad 22 auf den Drehkörper 21 übertragen (falls gewünscht mit einer Über- oder Untersetzung) und verursacht das Öffnen oder Schliessen der Spannmittel 14.

Wenn nun zum Beispiel mit dem Tastsensor 27 die Topographie des Spannobjekts 30 vermessen werden soll, während dieses Spannobjekt 30 in der Spannvorrichtung 10 eingespannt ist, wird das Spannobjekt 30 von der (CNC-) Steuerung 50 kontrolliert um die Spindelachse A1 gedreht. In diesem Fall würde der Drehkörper 21 mit dem Antriebszahnrad 22 in Wechselwirkung stehen und es müssten sowohl das Antriebszahnrad 22 als auch der Antrieb 23, selbst wenn dieser stromlos geschaltet ist, mitgedreht werden. Das würde zu unerwünschten Messungenauigkeiten führen, die durch eine Laufungenauigkeit der Spindel 12 hervorgerufen werden könnten. Ausserdem könnte sich durch Reibkräfte im System die Spannwirkung der Spannvorrichtung 10 ändern.

Daher wird gemäss Erfindung das Antriebszahnrad 22 relativ zum Drehkörper 21 in die bereits erwähnte neutrale Winkelstellung überführt, die in Fig. 2B angedeutet ist, bevor eine Messung oder Bearbeitung am Spannobjekt 30 ausgeführt wird. Da bewusst beim Auslegen des Antriebszahnrads 22 und des Drehkörpers 21 ein Flankenspiel vorgesehen wurde, ergibt sich in der neutralen Winkelstellung ein Flankenspiel F1 zwischen den Flanken 25 und 27 und ein Flankenspiel F2 zwischen den Flanken 24 und 26.

Gemäss Erfindung beträgt das Flankenspiel F = F1 + F2 bei allen Ausführungsformen mindestens 100 µm. Wenn das Spannobjekt 30 nicht gedreht wird, dann ruhen auch der Drehkörper 21 und das Antriebszahnrad 22, d.h. ω1 = ω2 = 0.

Vorzugsweise wird bei allen Ausführungsformen das Antriebszahnrad 22 solidarisch mit dem Drehkörper 21 gedreht, wenn das Spannobjekt 30 gedreht wird. In Fig. 2B ist dieser Aspekt dadurch angedeutet, dass die Winkelgeschwindigkeit ω1 in Richtung Gegenuhrzeigersinn zeigt. Die Winkelgeschwindigkeit ω2 zeigt in Richtung Uhrzeigersinn. Durch das solidarische Nachführen (aktives Mitdrehen), wird das Antriebszahnrad 22 stets in der neutralen Winkelstellung in Bezug zum Drehkörper 21 gehalten. Das solidarische Mitdrehen erfolgt unter Mitwirkung der Steuerung 50, die zu diesem Zweck die Winkelmesssensoren 15, 16 ausliest oder auswertet und die Ansteuerung des Antriebs 17 und des Antriebs 23 so vornimmt, dass die neutrale Winkelstellung auch beim Drehen der Spindel 12 und des Spannobjekts 30 beibehalten wird. Dieser Vorgang wird daher als aktives Mitdrehen bezeichnet, da das Drehbewegen der beiden Antriebe 17 und 23 unter Mitwirkung der Steuerung 50 geschieht.

Vorzugsweise wird bei allen Ausführungsformen das Flankenspiel F1, F2 so gewählt, dass selbst bei kleinen Schwankungen der Winkelgeschwindigkeit ω2 gegenüber der Winkelgeschwindigkeit ω1 es nicht zu einem Flankenkontakt kommt.

Die neutrale Winkelstellung zeichnet sich dadurch aus, dass weder eine vorauseilende Zahnflanke 24 noch eine nacheilende Zahnflanke 25 der Verzahnung des Antriebszahnrads 22 mit den korrespondierenden Zahnflanken 26, 27 der Verzahnung des Drehkörpers 21 im Kontakt stehen.

Vorzugsweise ist bei allen Ausführungsformen der erste Winkelmesssensor 15 der Spindel 21 und der zweite Winkelmesssensor 16 dem Antrieb 23 zugeordnet. Die Positionierung der Winkelmesssensoren 15 und 16 in Fig. 1A ist nur als Beispiel zu verstehen. Wichtig ist, dass die Ist-Positionen der Spindel 21 mittels des ersten Winkelmesssensors 15 und des Antriebszahnrads 22 mittels des zweiten Winkelmesssensors 16 detektierbar (von der Steuerung 50 erfassbar) sind und dass sowohl der erste Winkelmesssensor 15 als auch der zweite Winkelmesssensor 16 durch die Steuerung 50 auslesbar oder abfragbar sind. Die entsprechenden schaltungstechnischen Verbindungen s1 und s2 sind in Fig. 1A angedeutet.

Der Spindel 12 ist vorzugsweise bei allen Ausführungsformen ein Bremsmittel zugeordnet, das durch die Steuerung 50 aktivierbar ist, um eine Drehbewegung der Spindel 12 um die Spindelachse A1 zu verhindern, um durch das Drehantreiben des Antriebszahnrads 22 mittels des Antriebs 23 das Spannobjekt 30 einspannen oder ausspannen zu können.

Vorzugsweise ist bei allen Ausführungsformen der Spindel(elektro)antrieb 17 so als Bremsmittel ausgelegt, dass er durch die Steuerung 50 in einen Bremsmodus überführbar ist. Je nach Bauart des Spindel(elektro)antriebs 17 kann dieser z.B. gebremst werden, indem die Ansteuerung kurzgeschlossen wird, oder indem eine bestimmte Bremsrampe ansteuerungsseitig vorgegeben wird.

Vorzugsweise dient bei allen Ausführungsformen ein Stirnrad als Antriebszahnrad 22 und ein Ritzel als Drehkörper 21, wie in den Figuren 1A bis 2B gezeigt, wobei das Antriebszahnrad 22 zusammen mit dem Drehkörper 21 ein Stirnradgetriebe 20 bilden, das bewusst ein Flankenspiel aufweist.

Vorzugsweise dient bei allen Ausführungsformen ein Servomotor als (Hilfs-)Antrieb 23.

**Bezugszeichen:**

| | |
|---|---|
| Vorrichtung | 10 |
| Maschinentisch | 11 |
| Spindel | 12 |
| Adapter | 13 |
| Spannmittel | 14 |
| Spannbacken | 14.1, 14.2, 14.3 |
| erster Winkelmesssensor | 15 |
| zweiter Winkelmesssensor | 16 |
| Spindel(elektro)antrieb | 17 |
| Messaufbau | 18 |
| | |
| Getriebe | 20 |
| 1. Zahnrad / Drehkörper | 21 |
| 2. Zahnrad / Antriebszahnrad | 22 |
| (Elektro-)Antrieb | 23 |
| vorauseilende Zahnflanke | 24 |
| nacheilende Zahnflanke | 25 |
| Messachse | 26 |
| Messtaster | 27 |
| | |
| Spannobjekt / Körper | 30 |
| Zentralbohrung | 31 |
| | |
| CNC-Steuerung | 50 |
| | |
| Vorrichtung (Gesamtsystem) | 100 |
| | |
| Spindelachse | A1 |
| Hilfsachse | A2 |
| Flankenspiel | F = F1 + F2 |
| Oberseite | O1 |
| schaltungstechnische Verbindungen | s1, s2, s3, s4 |
| Drehbewegung des Drehkörpers 21 | ω1 |
| Drehbewegung des Antriebszahnrads | ω2 |
| 22 | |
| | |
| Linearachsen | X, Y, Z |
| Bewegung | W |

## Patentansprüche

1. Spannvorrichtung (10) mit einer drehantreibbaren Spindel (21) an der Spannmittel (14) zum mechanischen Einspannen eines Spannobjekts (30) angeordnet sind, wobei die Spannmittel (14) einen Drehkörper (21) umfassen, der es ermöglicht durch das Ausführen einer relativen Drehbewegung des Drehkörpers in Bezug zur Spindel (21) das Spannobjekt (30) einzuspannen oder auszuspannen, wobei
- der Drehkörper (21) eine Verzahnung aufweist,
- die Spannvorrichtung (10) ein Antriebszahnrad (22) umfasst, das mit einer Verzahnung versehen ist, die komplementär zu der Verzahnung des Drehkörpers (21) ausgelegt ist, wobei das Antriebszahnrad (22) im Eingriff mit dem Drehkörper (21) positioniert ist,
- die Spannvorrichtung (10) einen Antrieb (23) zum Drehantreiben des Antriebszahnrads (22) umfasst, **dadurch gekennzeichnet, dass** die Verzahnung des Drehkörpers (21) zusammen mit der Verzahnung des Antriebszahnrads (22) unter Vorgabe eines Flankenspiels (F1, F2) so ausgelegt wurden, dass das Antriebszahnrad (22) in Bezug zum Drehkörper (21) eine neutrale Winkelstellung einnehmen kann, bei der weder eine vorauseilende noch eine nacheilende Zahnflanke (24, 25) der Verzahnung des Antriebszahnrads (22) mit den korrespondierenden zahnflanken (26, 27) der Verzahnung des Drehkörpers (21) im Kontakt stehen.

2. Spannvorrichtung (10) nach Anspruch 1, **dadurch gekennzeichnet, dass** das Antriebszahnrad (22) mittels des Antriebs (23) und einer Steuerung (50) in die neutrale Wickelstellung bringbar ist.

3. Spannvorrichtung (10) nach Anspruch 2, **dadurch gekennzeichnet, dass** ein erster Winkelmesssensor (15) der Spindel (21) und ein zweiter Winkelmesssensor (16) dem Antrieb (23) zugeordnet sind, wobei die Ist-Positionen der Spindel (21) mittels des ersten Wiinkelmesssensors (15) und des Antriebszahnrads (22) mittels des zweiten Winkelmesssensors (16) detektierbar sind und wobei der erste Winkelmesssensor (15) und der zweite Winkelmesssensor (16) durch die Steuerung (50) auslesbar sind.

4. Spannvorrichtung (10) nach einem der Ansprüche 1 bis 3, **dadurch gekennzeichnet, dass** der Spindel (12) ein Bremsmittel zugeordnet ist, das aktivierbar ist, um eine Drehbewegung der Spindel (12) um eine Spindelachse (A1) zu verhindern, um durch das Drehantreiben des Antriebszahnrads (22) mittels des Antriebs (23) das Spannobjekt (30), einspannen oder ausspannen zu können.

5. Spannvorrichtung (10) nach Anspruch 4, **dadurch gekennzeichnet, dass** die Spindel (21) mittels eines Spindelantriebs (17) um die Spindelachse (A1) drehantreibbar ist.

6. Spannvorrichtung (10) nach Anspruch 4 in Kombination mit Anspruch 5, **dadurch gekennzeichnet, dass** der Spindelantrieb (17) als Bremsmittel dient, indem er durch die Steuerung (50) in einem Bremsmodus überführbar ist.

7. Spannvorrichtung (10) nach einem der vorhergehenden Ansprüche, **dadurch gekennzeichnet, dass** die Steuerung (50) dazu ausgelegt ist die Stromaufnahme des Antriebs (23) zu ermitteln, um beim Einspannen aus der Stromaufnahme ein erfolgreiches Einspannen und/oder das Erreichen einer Einspannkraft ermitteln zu können.

8. Spannvorrichtung (10) nach einem der vorhergehenden Ansprüche, **dadurch gekennzeichnet, dass** ein Stirnrad als Antriebszahnrad (22) und ein Ritzel als Drehkörper (21) dient, wobei das Antriebszahnrad (22) zusammen mit dem Drehkörper (21) ein Stirnradgetriebe (20) bilden.

9. Spannvorrichtung (10) nach einem der vorhergehenden Ansprüche 4 bis 6, **dadurch gekennzeichnet, dass** der Antrieb (23) eine Drehachse (A2) aufweist, die parallel zu der Spindelachse (A1) verläuft.

10. Gesamtsystem (100), das eine Spannvorrichtung (10) nach einem der vorhergehenden Ansprüche und eine CNC-Steuerung (50) umfasst, die dazu ausgelegt ist, die neutrale Winkelstellung vorzugeben und die Einhaltung der neutralen Winkelstellung zu ermitteln, um gegebenenfalls nachzuregeln.

11. Gesamtsystem (100) nach Anspruch 10, **dadurch gekennzeichnet, dass** es sich bei dem Gesamtsystem (100) um eine Bearbeitungsmaschine, eine Messmaschine oder einen Prüfstand handelt.

12. Verfahren zum mechanischen Ein- oder Ausspannen eines Spannobjekts (30) mittels einer Spannvorrichtung (10), mit den folgenden Schritten:
- Einbringen des Spannobjekts (30) in ein Spannmittel (14) der Spannvorrichtung (10), das an einer Spindel (12) angeordnet sind,
- entweder Drehantreiben eines Antriebszahnrads (22), das mit einem Drehkörper (21) der Spindel (12) im Eingriff steht, während die Spindel (12) festgehalten wird,
- oder Drehantreiben der Spindel (12), während der Drehkörper (21), der mit dem Antriebszahnrad (22) im Eingriff steht, durch das Antriebszahnrad (22) festgehalten wird,
um die Spannmittel (14) so zu bewegen, dass sie das Spannobjekt (30) einspannen oder ausspannen,
wobei in einem nachgelagerten Schritt der Drehkörper (21) relativ zu dem Antriebszahnrad (22) in eine neutrale Winkelstellung überführt wird, in der weder eine vorauseilende noch eine nacheilende Zahnflanke (24, 25) des Antriebszahnrads (22) mit korrespondierenden Zahnflanken (26, 27) der Verzahnung des Drehkörpers (21) im Kontakt stehen.

13. Verfahren nach Anspruch 12, **dadurch gekennzeichnet, dass** die neutrale Winkelstellung beim Ausführen von Drehbewegungen beibehalten wird.

14. Verfahren nach Anspruch 12 oder 13, **dadurch gekennzeichnet, dass** anhand von zwei Winkelmesssensoren (15, 16) die Ist-Winkelpositionen des Drehkörpers (21) und des Antriebszahnrads (22) ermittelt werden, und dass der Drehkörper (21) und/oder das Antriebszahnrad (22) eine kleine Winkeldrehung ausführen, um die neutrale Winkelstellung zu erreichen.

15. Verfahren nach Anspruch 12, **dadurch gekennzeichnet, dass** beim Ausführen einer Messung an dem Spannobjekt (30), oder beim Durchführen einer Prüfung des Spannobjekts (30), oder beim Bearbeiten des Spannobjekts (30) das Antriebszahnrad (22) mittels einer Steuerung (50) aktiv im Bezug zum Drehkörper (21) in der neutralen Winkelstellung gehalten wird.

16. Verfahren nach Anspruch 12, 13 oder 14, **dadurch gekennzeichnet, dass** beim Ausführen einer Drehbewegung des Spannobjekts (30) um eine Spindelachse (A1) das Antriebszahnrad (22) mittels einer Steuerung (50) mit einer angepassten Winkelgeschwindigkeit (ω2) kontrolliert mitbewegt wird, um dieses auch während der Drehbewegung des Spannobjekts (30) in der neutralen Winkelstellung zu halten.

## Claims

1. A chucking device (10) with a rotationally-drivable spindle (21) on which chucking means (14) for the mechanical chucking of a chucked object (30) are arranged, wherein the chucking means (14) comprise a rotating body (21), which allows, by the execution of a relative rotational movement of the rotating body with respect to the spindle (21), the chucked object (30) to be chucked or unchucked, wherein
- the rotating body (21) has gear teeth,
- the chucking device (10) comprises a drive gearwheel (22), which is provided with gear teeth, which are designed as complementary to the gear teeth of the rotating body (21), wherein the drive gearwheel (22) is positioned engaged with the rotating body (21),
- the chucking device (10) comprises a drive (23) for rotationally driving the drive gearwheel (22),
**characterized in that** the gear teeth of the rotating body (21) were designed together with the gear teeth of the drive gearwheel (22) with provision of a flank play (F1, F2) such that the drive gearwheel (22) can assume a neutral angular position with respect to the rotating body (21), in which neither a leading nor a trailing tooth flank (24, 25) of the gear teeth of the drive gearwheel (22) are in contact with the corresponding tooth flanks (26, 27) of the gear teeth of the rotating body (21).

2. The chucking device (10) according to claim 1, **characterized in that** the drive gearwheel (22) is movable into the neutral angular position by means of the drive (23) and a controller (50).

3. The chucking device (10) according to claim 2, **characterized in that** a first angle measuring sensor (15) is assigned to the spindle (21) and a second angle measuring sensor (16) is assigned to the drive (23), wherein the actual positions of the spindle (21) are detectable by means of the first angle measuring sensor (15) and those of the drive gearwheel (22) are detectable by means of the second angle measuring sensor (16), and wherein the first angle measuring sensor (15) and the second angle measuring sensor (16) can be read out by the controller (50).

4. The chucking device (10) according to one of claims 1 to 3, **characterized in that** a braking means is assigned to the spindle (12), which is activatable in order to prevent a rotational movement of the spindle (12) about a spindle axis (A1), in order to be able to chuck or unchuck the chucked object (30) by the rotational driving of the drive gearwheel (22) by means of the drive (23).

5. The chucking device (10) according to claim 4, **characterized in that** the spindle (21) is rotationally drivable about the spindle axis (A1) by means of a spindle drive (17).

6. The chucking device (10) according to claim 4 in combination with claim 5, **characterized in that** the spindle drive (17) serves as braking means, **in that** it can be transferred by the controller (50) into a braking mode.

7. The chucking device (10) according to one of the preceding claims, **characterized in that** the controller (50) is designed for the purpose of ascertaining the current intake of the drive (23), in order to be able to ascertain successful chucking and/or the achievement of a chucking force during the chucking from the current intake.

8. The chucking device (10) according to one of the preceding claims, **characterized in that** a spur gear serves as the drive gearwheel (22) and a pinion serves as the rotating body (21), wherein the drive gearwheel (22) together with the rotating body (21) form a spur gearing (20).

9. The chucking device (10) according to one of preceding claims 4 to 6, **characterized in that** the drive (23) has a rotational axis (A2), which extends in parallel to the spindle axis (A1).

10. An overall system (100), which comprises a chucking device (10) according to one of the preceding claims and a CNC controller (50), which is designed for the purpose of specifying the neutral angular position and ascertaining the maintenance of the neutral angular position, in order to readjust it if necessary.

11. The overall system (100) according to claim 10, **characterized in that** the overall system (100) is a machine tool, a measuring machine, or a test stand.

12. A method for mechanically chucking or unchucking a chucked object (30) by means of a chucking device (10), having the following steps:
- introducing the chucked object (30) into a chucking means (14) of the chucking device (10), which is arranged on a spindle (12),
- either rotationally driving a drive gearwheel (22), which is engaged with a rotating body (21) of the spindle (12), while the spindle (12) is fixed,
- or rotationally driving the spindle (12), while the rotating body (21), which is engaged with the drive gearwheel (22), is fixed by the drive gearwheel (22),
in order to move the chucking means (14) such that they either chuck or unchuck the chucked object (30),
wherein in a subsequent step the rotating body (21) is transferred relative to the drive gearwheel (22) into a neutral angular position, in which neither a leading nor a trailing tooth flank (24, 25) of the drive gearwheel (22) is in contact with corresponding tooth flanks (26, 27) of the gear teeth of the rotating body (21).

13. The method according to claim 12, **characterized in that** the neutral angular position is maintained during the execution of rotational movements.

14. The method according to claim 12 or 13, **characterized in that**, on the basis of two angle measuring sensors (15, 16), the actual angular positions of the rotating body (21) and the drive gearwheel (22) are determined, and the rotating body (21) and/or the drive gearwheel (22) execute a small angular rotation, in order to achieve the neutral angular position.

15. The method according to claim 12, **characterized in that**, during the execution of a measurement on the chucked object (30), or during the performance of a test of the chucked object (30), or during the machining of the chucked object (30), the drive gearwheel (22) is actively held in the neutral angular position with respect to the rotating body (21) by means of a controller (50).

16. The method according to claim 12, 13, or 14, **characterized in that**, during the execution of a rotational movement of the chucked object (30) about a spindle axis (A1), the drive gearwheel (22) is also moved in a controlled manner by means of a controller (50) at an adapted angular velocity (ω2), in order to also hold it in the neutral angular position during the rotational movement of the chucked object (30).

## Revendications

1. Dispositif de serrage (10) comprenant une broche (21) pouvant être entraînée en rotation sur laquelle sont agencés des moyens de serrage (14) pour serrer mécaniquement un objet (30), les moyens de serrage (14) comprenant un corps rotatif (21) qui permet, par l'exécution d'un mouvement de rotation relatif du corps rotatif par rapport à la broche (21), de serrer ou relâcher l'objet (30), dans lequel
- le corps rotatif (21) présente une denture,
- le dispositif de serrage (10) comprend une roue dentée d'entraînement (22) qui est pourvue d'une denture qui est conçue complémentaire à la denture du corps rotatif (21), la roue dentée d'entraînement (22) étant positionnée en prise avec le corps rotatif (21),
- le dispositif de serrage (10) comprend un entraînement (23) pour entraîner en rotation la roue dentée d'entraînement (22),
**caractérisé en ce que** la denture du corps rotatif (21) avec la denture de la roue dentée d'entraînement (22), avec spécification d'un jeu de flancs (F1, F2) ont été conçues de façon à ce que la roue dentée d'entraînement (22) puisse occuper une position angulaire neutre par rapport au corps rotatif (21) dans laquelle soit un flanc de dent supérieur ou un flanc de dent inférieur (24, 25) de la denture de la roue dentée d'entraînement (22) se trouve en contact avec les flancs de dents correspondants (26, 27) de la denture du corps rotatif (21).

2. Dispositif de serrage (10) selon la revendication 1, **caractérisé en ce que** la roue dentée d'entraînement (22) peut être amenée dans la position angulaire neutre à l'aide de l'entraînement (23) et d'une commande (50).

3. Dispositif de serrage (10) selon la revendication 2, **caractérisé en ce qu'**il est rattaché à la broche (21) un premier capteur de mesure angulaire (15) et à l'entraînement (23) un deuxième capteur de mesure angulaire (16), la position réelle de la broche (21) pouvant être détectée à l'aide du premier capteur de mesure angulaire (15) et celle de la roue dentée d'entraînement (22) à l'aide du deuxième capteur de mesure angulaire (16), le premier capteur de position angulaire (15) et le deuxième capteur de position angulaire (16) pouvant être lus par la commande (50).

4. Dispositif de serrage (10) selon l'une des revendications 1 à 3, **caractérisé en ce qu'**il est rattaché à la broche (12) un moyen de freinage qui peut être activé pour empêcher un mouvement de rotation de la broche (12) autour d'un axe de broche (A1) pour pouvoir, de par l'entraînement en rotation de la roue dentée d'entraînement (22) au moyen de l'entraînement (23), serrer ou relâcher l'objet (30).

5. Dispositif de serrage (10) selon la revendication 4, **caractérisé en ce que** la broche (21) peut être entraînée en rotation autour de l'axe de broche (A1) par un entraînement de broche (17).

6. Dispositif de serrage (10) selon la revendication 4 en combinaison avec la revendication 5, **caractérisé en ce que** l'entraînement de broche (17) sert de moyen de freinage dans la mesure où il peut être passé en mode freinage par le biais de la commande (50).

7. Dispositif de serrage (10) selon l'une des revendications précédentes, **caractérisé en ce que** la commande (50) est conçue pour déterminer la consommation électrique de l'entraînement (23) pour pouvoir, lors du serrage, déterminer à partir de la consommation d'énergie un serrage réussi et/ou l'obtention d'une force de serrage.

8. Dispositif de serrage (10) selon l'une des revendications précédentes, **caractérisé en ce qu'**une roue droite sert de roue dentée d'entraînement (22) et un pignon de corps rotatif (21), la roue dentée d'entraînement (22) et le corps rotatif (21) formant ensemble un engrenage droit (20).

9. Dispositif de serrage (10) selon l'une des revendications 4 à 6, **caractérisé en ce que** l'entraînement (23) présente un axe de rotation (A2) qui s'étend parallèlement à l'axe de broche (A1).

10. Système global (100) comprenant un dispositif de serrage (10) selon l'une des revendications précédentes et une commande CNC (50) qui est conçue pour fixer la position angulaire neutre et pour déterminer le maintien de la position angulaire neutre, et le cas échéant la réajuster.

11. Système global (100) selon la revendication 10, **caractérisé en ce que** le système global (100) est une machine d'usinage, une machine de mesure ou un banc d'essai.

12. Procédé pour serrer ou relâcher mécaniquement un objet (30) à l'aide d'un dispositif de serrage (10), comprenant les étapes consistant à:
- amener l'objet (30) dans un moyen de serrage (14) du dispositif de serrage (10) qui est agencé au niveau d'une broche (12),
- soit entraîner en rotation une roue dentée d'entraînement (22) qui est en prise avec un corps rotatif (21) de la broche (12) pendant que la broche (12) est maintenue fixe,
- soit entraîner en rotation la broche (12) pendant que le corps rotatif (21) qui est en prise avec la roue dentée d'entraînement (22) est maintenu fixe par la roue dentée d'entraînement (22), pour déplacer les moyens de serrage (14) de façon à ce qu'ils serrent ou relâchent l'objet (30),
dans une étape suivante le corps rotatif (21) étant transféré dans une position angulaire neutre par rapport à la roue dentée d'entraînement (22), dans laquelle ni un flanc de dent inférieur ni un flanc de dent supérieur (24, 25) de la roue dentée d'entraînement (22) est en contact avec les flancs de dents correspondants (26, 27) de la denture du corps rotatif (21).

13. Procédé selon la revendication 12, **caractérisé en ce que** la position angulaire neutre est conservée lors de l'exécution des mouvements de rotation.

14. Procédé selon la revendication 12 ou 13, **caractérisé en ce que** la position angulaire réelle du corps rotatif (21) et de la roue dentée d'entraînement (22) est déterminée par le biais de deux capteurs de mesure angulaire (15, 16), et **en ce que** le corps rotatif (21) et/ou la roue dentée d'entraînement (22) effectuent une petite rotation angulaire pour atteindre la position angulaire neutre.

15. Procédé selon la revendication 12, **caractérisé en ce que**, lorsque l'on effectue une mesure sur l'objet (30), ou un contrôle de l'objet (30), ou pendant que l'on usine l'objet (30), la roue dentée d'entraînement (22) est activement maintenue dans la position angulaire neutre par rapport au corps rotatif (21) par le biais d'une commande (50).

16. Procédé selon la revendication 12, 13 ou 14, **caractérisé en ce que**, lorsque l'on effectue un mouvement de rotation de l'objet (30) autour d'un axe de broche (A1), la roue dentée d'entraînement (22) est déplacée en même temps de façon contrôlée à l'aide d'une commande (50) à une vitesse angulaire adaptée (ω2) pour pouvoir la maintenir dans la position angulaire neutre également pendant le mouvement de rotation de l'objet (30).
